(19) **Europäisches Patentamt European Patent Office Office européen des brevets**

(11) **EP 4 246 101 B1**

(12) **EUROPEAN PATENT SPECIFICATION**

(45) Date of publication and mention
of the grant of the patent:
**22.05.2024 Bulletin 2024/21**

(21) Application number: **23161988.3**

(22) Date of filing: **15.03.2023**

(51) International Patent Classification (IPC):
**G01G 3/14** (2006.01)     **G01G 3/18** (2006.01)
**G01L 1/22** (2006.01)

(52) Cooperative Patent Classification (CPC):
**G01G 3/1404; G01G 3/18; G01L 1/2206;
G01L 1/2281**

(54) **LOAD CELL**

**KRAFTMESSZELLE**

**CELLULE DE CHARGE**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.03.2022 JP 2022043871**

(43) Date of publication of application:
**20.09.2023 Bulletin 2023/38**

(73) Proprietor: **Ishida Co., Ltd.
Sakyo-ku
Kyoto-shi
Kyoto 606-8392 (JP)**

(72) Inventor: **TANIGUCHI, Tomoatsu
Ritto-shi, Shiga, 520-3026 (JP)**

(74) Representative: **Global IP Europe
Patentanwaltskanzlei
Pfarrstraße 14
80538 München (DE)**

(56) References cited:
**WO-A1-2008/029648**

**Description**

<u>TECHNICAL FIELD</u>

The present invention relates to a load cell.

<u>BACKGROUND</u>

As a conventional load cell, for example, one described in Patent Document 1 (JP S61-165606 A) is known. The load cell described in Patent Document 1 includes a strain body, a bridge circuit including a plurality of strain gauges provided on the strain body, a first temperature sensitive resistor made of copper and provided in a wiring that applies a voltage to the bridge circuit, and a second temperature sensitive resistor made of nickel and provided in the wiring. In the load cell, the temperature sensitivity is compensated for by correcting primary and secondary components in temperature dependence of an output voltage using the first and second temperature sensitive resistors.

WO 2008/029648 A1 discloses a load cell unit having a strain inducing member with strain inducing parts in which strain gages are disposed to form a bridge circuit, and a zero-point compensation element. The zero-point compensation element is disposed between adjacent strain inducing parts so as to compensate the zero point of the bridge circuit in accordance with the temperature of the strain inducing member.

<u>SUMMARY</u>

Conventionally, the load cell is designed so that a ratio between a resistance value of the first temperature sensitive resistor and a resistance value of the second temperature sensitive resistor is 1:1 (the resistance value of the first temperature sensitive resistor/the resistance value of the second temperature sensitive resistor=1.0). In this way, in a configuration in which the resistance value of the first temperature sensitive resistor and the resistance value of the second temperature sensitive resistor are equivalent, when a temperature is low (for example, -10°C) or high (for example, 50°C) relative to a reference temperature (for example, 20°C), a difference in temperature sensitivity (ppm/°C) occurs due to the presence of the secondary component. When there is a difference in temperature sensitivity between the low temperature and the high temperature, it becomes difficult to correct the temperature sensitivity on the low temperature side and the temperature sensitivity on the high temperature side at the same time. In addition, when a difference between a span-adjusted reference temperature and a temperature (a high temperature or a low temperature) at the time of use of the load cell is large, the temperature sensitivity at the time of use is significantly increased. For these reasons, the temperature dependence of the output voltage cannot be reduced over a wide temperature range. In order to further improve the temperature sensitivity, it is necessary to reduce the temperature dependence of the output voltage over a wide temperature range.

An object of one aspect of the present invention is to provide a load cell capable of improving temperature sensitivity characteristics.

The applicant of the present application has found that the difference in the temperature sensitivity between a low temperature and a high temperature can be reduced by setting the ratio between the resistance value of the first temperature sensitive resistor and the resistance value of the second temperature sensitive resistor to an appropriate value, and the temperature sensitivity characteristics are improved while earnestly researching on the above problem. The present invention is based on this new finding.

A load cell according to one aspect of the present invention includes a strain body, a bridge circuit including a plurality of strain gauges provided on the strain body, a first temperature sensitive resistor containing at least copper and provided on a wiring that is configured to apply a voltage to the bridge circuit, and a second temperature sensitive resistor provided on the wiring and having a material or a material content ratio different from that of the first temperature sensitive resistor, wherein a resistance value of the first temperature sensitive resistor is 1.12 times or more a resistance value of the second temperature sensitive resistor.

The applicant of the present application has found that, when the resistance value of the second temperature sensitive resistor is high, correction of a secondary component by the second temperature sensitive resistor functions excessively. When there is excessive compensation in the secondary component by the second temperature sensitive resistor, the secondary component in which a sign of the secondary component is reversed is still present, and temperature dependence of an output voltage cannot be reduced over a wide temperature range. Therefore, in the load cell according to one aspect of the present invention, the resistance value of the first temperature sensitive resistor is set to 1.12 times or more the resistance value of the second temperature sensitive resistor. In this way, in the load cell, the resistance value of the first temperature sensitive resistor is set higher than the resistance value of the second temperature sensitive resistor. In other words, the resistance value of the second temperature sensitive resistor is set lower than the resistance value of the first temperature sensitive resistor. Thus, in the load cell, excessive correction of the secondary component by the second temperature sensitive resistor can be curbed, and after the primary and secondary components of the output voltage are appropriately corrected, the temperature dependence of the output voltage can be reduced in a wide temperature range from a low temperature to a high temperature. Therefore, in the load cell, it is possible to improve temperature sensitivity characteristics. As a result, in the load cell, weighing accuracy can be improved.

In one embodiment, the resistance value of the first temperature sensitive resistor may be 1.32 times or more the resistance value of the second temperature sensitive resistor. With such a configuration, a difference in the temperature sensitivity between a low temperature and a high temperature can be further reduced. Therefore, it is possible to further improve the temperature sensitivity characteristics.

In one embodiment, the resistance value of the first temperature sensitive resistor may be 5.76 times or less the resistance value of the second temperature sensitive resistor. In such a configuration, the secondary component can be appropriately corrected by the second temperature sensitive resistor.

In one embodiment, the resistance value of the first temperature sensitive resistor may be 3.52 times or less the resistance value of the second temperature sensitive resistor. In such a configuration, the secondary component can be appropriately corrected by the second temperature sensitive resistor.

In one embodiment, the second temperature sensitive resistor may contain at least one of nickel, aluminum, gold, cobalt, tantalum, iron, and platinum. In such a configuration, the secondary component can be appropriately corrected by the second temperature sensitive resistor.

According to one aspect of the present invention, it is possible to improve the temperature sensitivity characteristics.

## BRIEF DESCRIPTION OF THE DRAWINGS

FIG. 1 is a diagram showing a bridge circuit of a load cell.
FIG. 2 is a diagram showing a strain body of the load cell.
FIG. 3 is a table showing simulation results of the load cell according to a first embodiment.
FIG. 4 is a graph showing the simulation results of the load cell according to the first embodiment.
FIG. 5 is a table showing simulation results of the load cell according to a second embodiment.
FIG. 6 is a graph showing the simulation results of the load cell according to the second embodiment.

## DETAILED DESCRIPTION

Hereinafter, preferred embodiments of the present invention will be described in detail with reference to the accompanying drawings. In the description of the drawings, the same or corresponding elements are denoted by the same reference numerals, and overlapping descriptions will be omitted.

[Configuration of load cell]

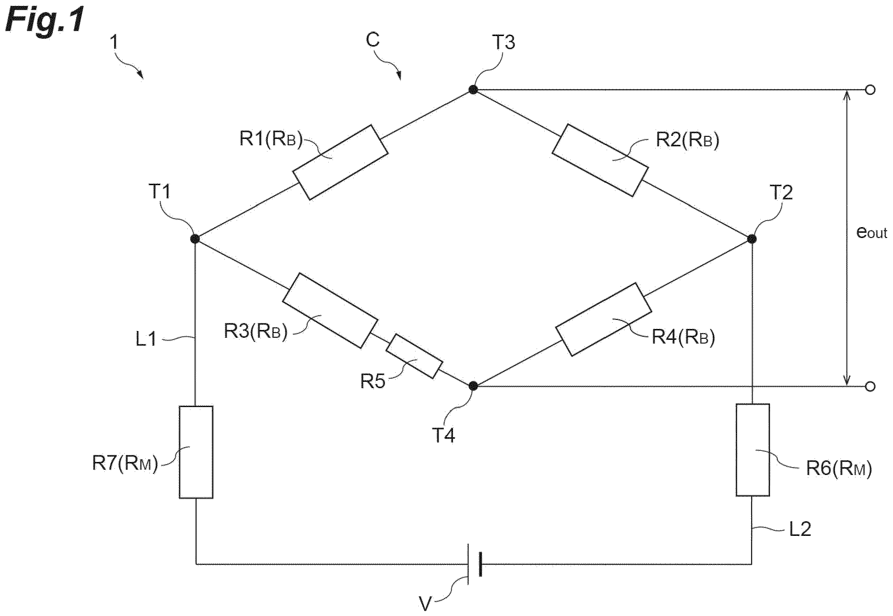

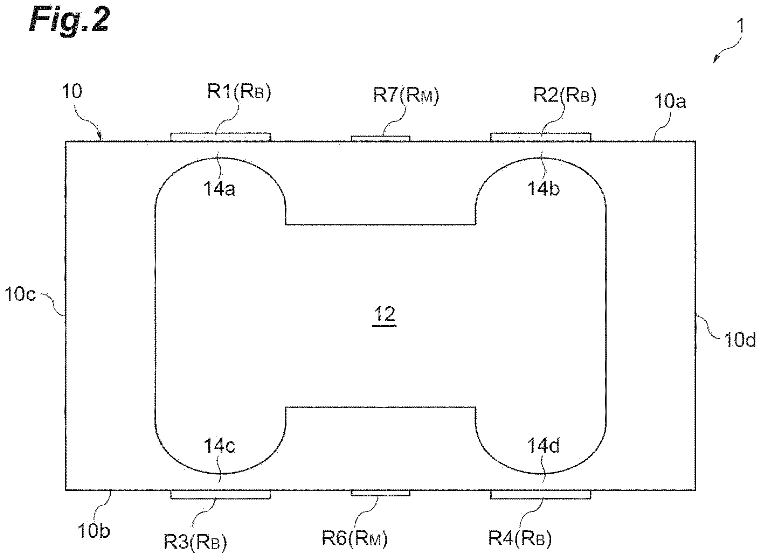

As shown in FIGS. 1 and 2, a load cell 1 includes a strain body 10, a bridge circuit C, a first temperature sensitive resistor R6 and a second temperature sensitive resistor R7.

As shown in FIG. 2, the strain body 10 is a metal block having a rectangular parallelepiped shape. The strain body 10 has a Roberval (parallelogram) shape. The strain body 10 is an elastic body made of a metal such as an aluminum alloy or stainless steel. The strain body 10 has a pair of main surfaces (not shown) and four side surfaces 10a, 10b, 10c and 10d that connects the main surfaces. In the strain body 10, for example, the side surface 10c is a fixed end fixed to a case of a combination weighing device or the like, and the side surface 10d is a free end to which a load is applied.

A through portion 12 is provided in the strain body 10. The through portion 12 is formed so as to pass through the pair of main surfaces of the strain body 10. The through portion 12 is substantially H-shaped. Specifically, the through portion 12 is formed by two first and second portions of which a longitudinal direction is a facing direction in which the pair of side surfaces 10a and 10b face each other, and a third portion located between the first portion and the second portion and having a smaller dimension in the facing direction than the first portion and the second portion.

A first notch portion 14a, a second notch portion 14b, a third notch portion 14c, and a fourth notch portion 14d are formed in the strain body 10. The first notch portion 14a, the second notch portion 14b, the third notch portion 14c, and the fourth notch portion 14d are thin portions in the strain body 10. The first notch portion 14a and the second notch portion 14b are portions between the side surface 10a and the through portion 12. The third notch portion 14c and the fourth notch portion 14d are portions between the side surface 10b and the through portion 12.

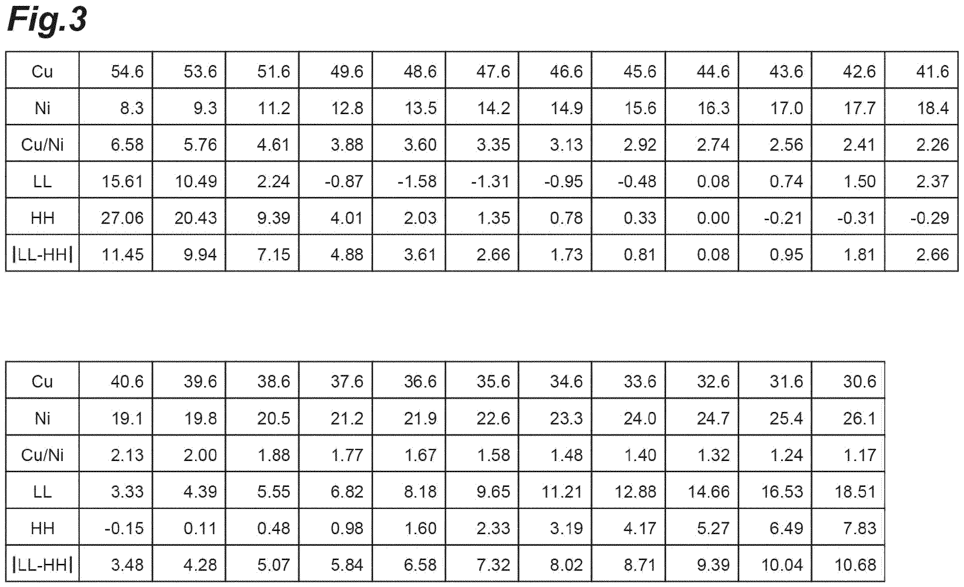

As shown in FIG. 3, the bridge circuit C has two input terminals T1 and T2 and two output terminals T3 and T4. An output voltage ($e_{out}$) between the two output terminals T3 and T4 of the bridge circuit C is output to a control part (not shown). Specifically, the output voltage between the output terminals T3 and T4 is subjected to filtering and the like, and is output as a signal indicating a weighing value of an article.

The bridge circuit C includes a first strain gauge R1, a second strain gauge R2, a third strain gauge R3, and a fourth strain gauge R4. The first strain gauge R1, the second strain gauge R2, the third strain gauge R3, and the fourth strain gauge R4 are configured by arranging a resistor such as a resistor foil on an electrical insulator (for example, a polyimide resin). The resistor is made of a metal such as a nickel-chromium alloy, for example. Resistance changes occur in the first strain gauge R1, the second strain gauge R2, the third strain gauge R3, and the fourth strain gauge R4 according to an amount of strain. The first strain gauge R1, the second strain gauge R2, the third strain gauge R3 and the fourth strain gauge R4 constitute a bridge resistor $R_B$.

As shown in FIG. 2, the first strain gauge R1 is disposed on the side surface 10a of the strain body 10. The first strain gauge R1 is disposed in the first notch portion 14a on the side surface 10a. The second strain gauge R2 is disposed on the side surface 10a of the strain body 10. The second strain gauge R2 is disposed in the second notch portion 14b on the side surface 10a. The first strain gauge R1 and the second strain gauge R2 are disposed with a predetermined interval therebetween on the side surface 10a.

The third strain gauge R3 is disposed on the side surface 10b of the strain body 10. The third strain gauge R3 is disposed in the third notch portion 14c on the side surface 10b. The fourth strain gauge R4 is disposed on the side surface 10b of the strain body 10. The fourth strain gauge R4 is disposed in the fourth notch portion 14d on the side surface 10b. The third strain gauge R3 and the fourth strain gauge R4 are disposed with a predetermined interval therebetween on the side surface 10b.

As shown in FIG. 1, a temperature zero compensation element R5 is provided in the bridge circuit C. The temperature zero compensation element R5 is an element that compensates for deviation of a zero point of the bridge circuit C due to a temperature change. A resistance value of the temperature zero compensation element R5 is set so as to compensate for the temperature zero of the bridge circuit C. The temperature zero compensation element R5 is connected, for example, between the output terminal T3 and the third strain gauge R3. The temperature zero compensation element R5 is disposed on the side surface 10b of the strain body 10, for example. The temperature zero compensation element R5 is disposed, for example, between the third strain gauge R3 and the fourth strain gauge R4.

A power supply V is connected to the input terminal T1 and the input terminal T2 of the bridge circuit C. A wiring L1 that connects the input terminal T1 and the power supply V is connected to a second temperature sensitive resistor R7. A wiring L2 that connects the input terminal T2 and the power supply V is connected to the first temperature sensitive resistor R6. The wirings L1 and L2 are wirings for applying a voltage to the bridge circuit C.

The first temperature sensitive resistor R6 is an element that compensates for the temperature sensitivity of the load cell 1. The first temperature sensitive resistor R6 is made of copper. The first temperature sensitive resistor R6 may be formed by including other substances besides copper. As shown in FIG. 2, the first temperature sensitive resistor R6 is disposed on the side surface 10b of the strain body 10. The first temperature sensitive resistor R6 is disposed between the third strain gauge R3 and the fourth strain gauge R4.

The second temperature sensitive resistor R7 is an element that compensates for the temperature sensitivity of the load cell 1. The second temperature sensitive resistor R7 is formed to contain nickel as a material. The second temperature sensitive resistor R7 is different from the first temperature sensitive resistor R6 in material or material content ratio. The second temperature sensitive resistor R7 may be formed by including other substances besides nickel.

The second temperature sensitive resistor R7 is disposed on the side surface 10a of the strain body 10. The second temperature sensitive resistor R7 is disposed between the first strain gauge R1 and the second strain gauge R2. The first temperature sensitive resistor R6 and the second temperature sensitive resistor R7 are preferably located near the positions of the first strain gauge R1, the second strain gauge R2, the third strain gauge R3 and the fourth strain gauge R4 (that is, the positions of the first notch portion 14a, the second notch portion 14b, the positions of the third notch portion 14c and the fourth notch portion 14d) from the viewpoint of making the temperature the same as the first strain gauge R1, the second strain gauge R2, the third strain gauge R3, and the fourth strain gauge R4 as much as possible, and preferably avoids the positions of the first notch portion 14a, the second notch portion 14b, the third notch portion 14c and the fourth notch portion 14d from the viewpoint of not affecting deformation of the strain body 10, and thus are disposed between the first notch portion 14a and the second notch portion 14b and between the third notch portion 14c and the fourth notch portion 14d. Thus, a temperature change curve of the output voltage can be appropriately corrected without degrading measurement accuracy due to the physical installation of the first temperature sensitive resistor R6 and the second temperature sensitive resistor R7.

In this embodiment, the resistance value of the first temperature sensitive resistor R6 is 1.12 times or more the resistance value of the second temperature sensitive resistor R7. Preferably, the resistance value of the first temperature sensitive resistor R6 is 1.32 times or more the resistance value of the second temperature sensitive resistor R7. The resistance value of the first temperature sensitive resistor R6 is 5.76 times or less the resistance value of the second temperature sensitive resistor R7. Preferably, the resistance value of the first temperature sensitive resistor R6 is 3.52 times or less the resistance value of the second temperature sensitive resistor R7. That is, the resistance value of the first temperature sensitive resistor R6 is preferably 1.32 times or more and 3.52 times or less the resistance value of the second temperature sensitive resistor R7.

[Simulation]

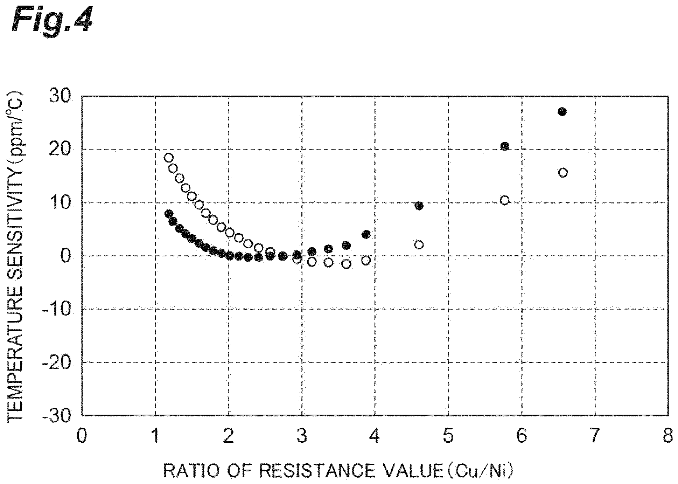

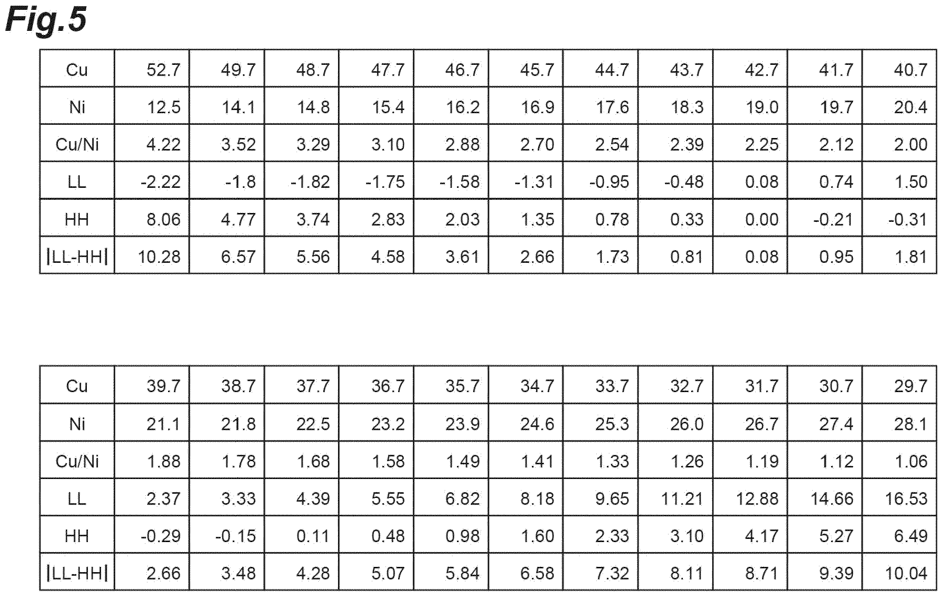

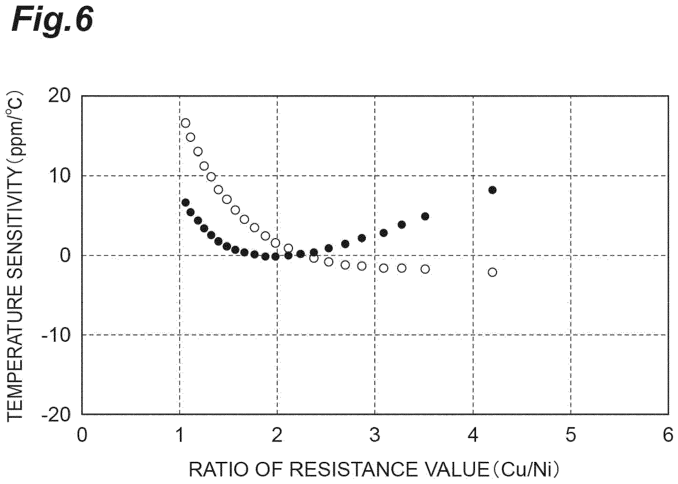

Next, simulation results of the load cell 1 will be described. FIG. 3 is a table showing the simulation results of the load cell 1 according to a first embodiment. FIG. 4 is a graph showing the simulation results of the load cell 1 according to the first embodiment. FIG. 5 is a table showing the simulation results of the load cell 1 according to a second embodiment. FIG. 6 is a graph showing the simulation results of the load cell 1 according to the second embodiment.

The load cell 1 according to the first embodiment and the load cell 1 according to the second embodiment have different rated loads. The load cell 1 according to the first embodiment has a rated load of 6 kg, for example. The load cell 1 according to the second embodiment has a rated load of 25 kg, for example. The load cells 1 according to the first and second embodiments have the same structures in the strain body 10 and the bridge circuit C.

In FIGS. 3 and 5, "Cu" indicates the resistance value of the first temperature sensitive resistor R6. "Ni" indicates the resistance value of the second temperature sensitive resistor R7. "Cu/Ni" indicates a ratio between the resistance values of the first temperature sensitive resistor R6 and the second temperature sensitive resistor R7. "LL" indicates the temperature sensitivity (ppm/°C) when the ambient temperature of the load cell 1 changes to a low temperature (for example, -10°C) with respect to a reference temperature (for example, 20°C). "HH" indicates the temperature sensitivity (ppm/°C) when the ambient temperature of the load cell 1 changes to a high temperature (for example, 50°C) with respect to the reference temperature. "|LL-HH|" is an absolute value (ppm/°C) of a difference between the temperature sensitivity at the low temperature and the temperature sensitivity at the high temperature.

In FIGS. 4 and 6, a horizontal axis indicates the ratio (Cu/Ni) of the first temperature sensitive resistor R6 and the second temperature sensitive resistor R7, and a vertical axis indicates the temperature sensitivity (ppm/°C). In FIGS. 4 and 6, "white circles" indicate the temperature sensitivity (ppm/°C) at the low temperature, and "black circles" indicate the temperature sensitivity (ppm/°C) at the high temperature.

A known method can be used for the simulation. For the simulation, for example, the following Equation can be used. When the output voltage of the load cell 1 at the reference temperature (for example, 20°C.) is set to $e_{out}^0$ and the output voltage of the load cell 1 at a temperature t is set to $e_{out}^t$, the relationship between $e_{out}^0$ and $e_{out}^t$ is given by the following Equation (1).
[Equation 1]

$$e_{out}^t = \frac{R_M^0 + R_B}{(R_M^0 + R_B) + R_M^0(\alpha\Delta T + \beta\Delta T^2)} e_{out}^0 \cdots (1)$$

In Equation (1) described above, $R_B$ is a total resistance value of the bridge circuit C, and $R_M^0$ is the resistance value of the first temperature sensitive resistor R6 and the second temperature sensitive resistor R7 at the reference temperature. $\Delta T$ is a difference between the temperature t°C and the reference temperature. $\alpha\Delta T + \beta\Delta T^2$ represents a temperature coefficient of resistance (TCR) of the first temperature sensitive resistor R6 and the second temperature sensitive resistor R7. A primary temperature coefficient $\alpha$ and a secondary temperature coefficient $\beta$ are characteristic values of the first temperature sensitive resistor R6 and the second temperature sensitive resistor R7.

When a resistance value $R_{M(Cu)}^0$ of the first temperature sensitive resistor R6 containing copper as a material (the value of Cu in FIGS. 3 and 4), characteristic values $\alpha_{(Cu)}$ and $\beta_{(Cu)}$ of the first temperature sensitive resistor R6 and a resistance value $R_{M(Ni)}^0$ of the second temperature sensitive resistor R7 containing nickel as a material (the value of Ni in FIGS. 3 and 4), and characteristic values $\alpha_{(Ni)}$ and $\beta_{(Ni)}$ of the second temperature sensitive resistor R7 are used, $e_{out}^t$ can be obtained from the following Equation (2).
[Equation 2]

$$e_{out}^t = \frac{R_{M(Ni)}^0 + R_B}{(R_{M(Ni)}^0 + R_B) + R_{M(Ni)}^0(\alpha_{(Ni)}\Delta T + \beta_{(Ni)}\Delta T^2)} \times \frac{R_{M(Cu)}^0 + R_B}{(R_{M(Cu)}^0 + R_B) + R_{M(Cu)}^0(\alpha_{(Cu)}\Delta T + \beta_{(Cu)}\Delta T^2)} e_{out}^0 \cdots (2)$$

$e_{out}^t$ can be obtained by actually measuring $e_{out}^0$ which is the output voltage of the load cell 1 at the reference temperature. Then, the temperature sensitivity S ("LL" or "HH") can be obtained from the following Equation (3) using the obtained $e_{out}^t$.
[Equation 3]

$$S = \left(\frac{e_{out}^{t} - e_{out}^{0}}{e_{out}^{0}\Delta T}\right) \times 10^{6} \ ...(3)$$

Here, a simulation was performed on the temperature sensitivity when the resistance value of the first temperature sensitive resistor R6 and the resistance value of the second temperature sensitive resistor R7 were changed. A simulation of the load cell 1 is carried out in the first and second embodiments which will be described below. In FIGS. 3 and 4, LL is the temperature sensitivity S calculated with a reference temperature of 20°C and t=-10°C ($\Delta T$=-30°C). HH is the temperature sensitivity S calculated with a reference temperature of 20°C and t=50°C ($\Delta T$=30°C). |LL-HH| is an absolute value of a difference between LL and HH and can be brought closer to 0 as the secondary component of temperature sensitivity is appropriately corrected. That is, as the |LL-HH| becomes smaller, the temperature dependence of the secondary component of the output voltage can be reduced in a wide temperature range from a low temperature to a high temperature away from the reference temperature.

Furthermore, as a result of earnest examination, the following was found. Since the resistance value $R_{M(Cu)}^{0}$ of the first temperature sensitive resistor R6 and the resistance value $R_{M(Ni)}^{0}$ of the second temperature sensitive resistor R7 can be independently determined, a combination of the resistance values ($R_{M(Cu)}^{0}$ and $R_{M(Ni)}^{0}$) for obtaining a certain resistance value ratio Cu/Ni ($R_{M(Cu)}^{0}/R_{M(Ni)}^{0}$) is not unique. However, when the combination of the resistance values ($R_{M(Cu)}^{0}$ and $R_{M(Ni)}^{0}$) is changed within a range of the same resistance value ratio Cu/Ni, it was found that, when LL is improved, HH is deteriorated, and when HH is improved, LL is deteriorated. Additionally, it was also found that the absolute value |LL-HH| of the difference in the temperature sensitivity at a certain resistance value ratio Cu/Ni does not change significantly no matter how the combination of the resistance values ($R_{M(Cu)}^{0}$ and $R_{M(Ni)}^{0}$) is adjusted. Based on these facts, the range of the resistance value ratio Cu/Ni in which |LL-HH| becomes small was obtained by the simulation.

As shown in FIG. 3, in the load cell 1 according to the first embodiment, |LL-HH| is less than 10 ppm/°C (9.39) when the ratio between the resistance value of the first temperature sensitive resistor R6 and the resistance value of the second temperature sensitive resistor R7 is 1.32. In the load cell 1 according to the first embodiment, |LL-HH| is 10 ppm/°C or more (10.04) when the ratio between the resistance value of the first temperature sensitive resistor R6 and the resistance value of the second temperature sensitive resistor R7 is less than 1.32 (1.24). In the load cell 1 according to the first embodiment, |LL-HH| is less than 10 ppm/°C when the ratio between the resistance value of the first temperature sensitive resistor R6 and the resistance value of the second temperature sensitive resistor R7 is 5.76. In the load cell 1 according to the first embodiment, |LL-HH| is 10 ppm/°C or more (11.45) when the ratio between the resistance value of the first temperature sensitive resistor R6 and the resistance value of the second temperature sensitive resistor R7 is greater than 5.76 (6.58). In the load cell 1 according to the first embodiment, |LL-HH| becomes the smallest (0.08 ppm/°C) when the ratio between the resistance value of the first temperature sensitive resistor R6 and the resistance value of the second temperature sensitive resistor R7 is 2.74.

As shown in FIG. 5, in the load cell 1 according to the second embodiment, |LL-HH| is less than 10 ppm/°C (9.39) when the ratio between the resistance value of the first temperature sensitive resistor R6 and the resistance value of the second temperature sensitive resistor R7 is 1.12. In the load cell 1 according to the second embodiment, |LL-HH| is 10 ppm/°C or more (10.04) when the ratio between the resistance value of the first temperature sensitive resistor R6 and the resistance value of the second temperature sensitive resistor R7 is less than 1.12 (1.06). In the load cell 1 according to the second embodiment, |LL-HH| is less than 10 ppm/°C when the ratio between the resistance value of the first temperature sensitive resistor R6 and the resistance value of the second temperature sensitive resistor R7 is 3.52. In the load cell 1 according to the second embodiment, |LL-HH| is 10 ppm/°C or more (10.28) when the ratio between the resistance value of the first temperature sensitive resistor R6 to the resistance value of the second temperature sensitive resistor R7 is greater than 3.52 (4.22). In the load cell 1 according to the second embodiment, |LL-HH| is the smallest (0.08 ppm/°C) when the ratio between the resistance value of the first temperature sensitive resistor R6 and the resistance value of the second temperature sensitive resistor R7 is 2.25.

[Actions and effects]

As described above, in the load cell 1 according to this embodiment, the resistance value of the first temperature sensitive resistor R6 is 1.12 times or more the resistance value of the second temperature sensitive resistor R7. Thus, in the load cell 1, the resistance value of the first temperature sensitive resistor R6 is set higher than the resistance value of the second temperature sensitive resistor R7. In other words, the resistance value of the second temperature sensitive resistor R7 is set lower than the resistance value of the first temperature sensitive resistor R6. As a result, in the load cell 1, excessive correction of the secondary component by the second temperature sensitive resistor R7 can be curbed (the value of |LL-HH| is reduced), thus the primary and secondary components of the output voltage ($e_{out}$) can be appropriately corrected, and then the temperature dependence of the output voltage ($e_{out}$) can be reduced in a wide temperature range from a low temperature to a high temperature. Specifically, in the load cell 1 according to the first embodiment, the temperature sensitivity can be less than 10 ppm/°C. Therefore, in the load cell 1, it is possible to improve the temperature sensitivity characteristics. As a result, in the load cell 1, the weighing accuracy can be improved.

In the load cell 1 according to this embodiment, the resistance value of the first temperature sensitive resistor R6 is preferably 1.32 times or more the resistance value of the second temperature sensitive resistor R7. With such a configuration, in the load cell 1 according to the first embodiment and the load cell 1 according to the second embodiment, the temperature sensitivity can be less than 10 ppm/°C. In the load cell 1 according to the first embodiment, the difference in the temperature sensitivity between the low temperature and the high temperature can be further reduced. In particular, in the load cell 1 according to the first embodiment, it is possible to further improve the temperature sensitivity characteristics.

In the load cell 1 according to this embodiment, the resistance value of the first temperature sensitive resistor R6 is 5.76 times or less the resistance value of the second temperature sensitive resistor R7. In such a configuration, therefore, the secondary component can be appropriately corrected by the second temperature sensitive resistor R7. In the load cell 1 according to the first embodiment, the temperature sensitivity can be less than 10 ppm/°C.

In the load cell 1 according to this embodiment, the resistance value of the first temperature sensitive resistor R6 is preferably 3.21 times or less the resistance value of the second temperature sensitive resistor R7. In such a configuration, the secondary component can be appropriately corrected by the second temperature sensitive resistor R7. In the load cell 1 according to the first embodiment and the load cell 1 according to the second embodiment, the temperature sensitivity can be less than 10 ppm/°C.

In the load cell 1 according to this embodiment, the second temperature sensitive resistor R7 contains nickel. In such a configuration, the secondary component can be appropriately corrected by the second temperature sensitive resistor R7.

Although the embodiments of the present invention have been described above, the present invention is not necessarily limited to the above-described embodiments, and various modifications can be made without departing from the scope of the invention.

In the above-described embodiment, an example in which the first temperature sensitive resistor R6 is formed containing copper has been described. Copper is an example of a material (the quality of a material) having a small secondary temperature coefficient. However, the first temperature sensitive resistor R6 may be formed further including molybdenum. Moreover, the configuration in which the second temperature sensitive resistor R7 contains nickel has been described as an example. Nickel is an example of a material (the quality of a material) having a large secondary temperature coefficient. However, the second temperature sensitive resistor R7 may also include at least one of aluminum, gold, cobalt, tantalum, iron, platinum, and the like, together with or instead of nickel. The second temperature sensitive resistor R7 is preferably formed containing gold, aluminum, cobalt, tantalum, iron, or platinum, and more preferably formed containing gold, aluminum, or cobalt. These materials (the quality of materials) included in the first temperature sensitive resistor R6 and the second temperature sensitive resistor R7 may be single metals, alloys, or other impurities mixed therein.

In the above-described embodiment, a configuration in which the first temperature sensitive resistor R6 is connected between the power supply V and the input terminal T1, and the second temperature sensitive resistor R7 is connected between the power supply V and the input terminal T2 has been described as an example. However, the first temperature sensitive resistor R6 and the second temperature sensitive resistor R7 may be provided at other positions. For example, both the first temperature sensitive resistor R6 and the second temperature sensitive resistor R7 may be connected between the power supply V and the input terminal T1 or between the power supply V and the input terminal T2.

In the above-described embodiment, the configuration in which the first temperature sensitive resistor R6 is disposed between the first strain gauge R1 and the second strain gauge R2 on the side surface 10a of the strain body 10, and the second temperature sensitive resistor R7 is positioned between the third strain gauge R3 and the fourth strain gauge R4 on the side 10b of the strain body 10 has been described as an example. However, the first temperature sensitive resistor R6 and the second temperature sensitive resistor R7 may be disposed outside the first strain gauge R1 and the second strain gauge R2 on the side surface 10a in the facing direction of the pair of side surfaces 10c and 10d. Also, the first temperature sensitive resistor R6 and the second temperature sensitive resistor R7 may be disposed outside the third strain gauge R3 and the fourth strain gauge R4 on the side surface 10b in the facing direction of the pair of side surfaces 10c and 10d. Each of the first temperature sensitive resistor R6 and the second temperature sensitive resistor R7 may be located at a position avoiding directly above the first notch portion 14a, the second notch portion 14b, the third notch portion 14c, and the fourth notch portion 14d (relating to the deformation of the strain body 10) and a position close to the first strain gauge R1, the second strain gauge R2, the third strain gauge R3, and the fourth strain gauge R4. Therefore, each of the first temperature sensitive resistor R6 and the second temperature sensitive resistor R7 may be mounted on the main surface of the load cell 1.

Each of the first temperature sensitive resistor R6 and the second temperature sensitive resistor R7 may be disposed to divide the resistance value.

**Claims**

1.  A load cell (1) comprising:

    a strain body (10);
    a bridge circuit (C) including a plurality of strain gauges provided on the strain body (10);
    a first temperature sensitive resistor (R6) containing at least copper and provided on a wiring that is configured to apply a voltage to the bridge circuit; and
    a second temperature sensitive resistor (R7) provided on the wiring and having a material or a material content ratio different from that of the first temperature sensitive resistor (R6),
    **characterized in that**
    a resistance value of the first temperature sensitive resistor (R6) is 1.12 times or more a resistance value of the second temperature sensitive resistor (R7).

2.  The load cell (1) according to claim 1, wherein
    the resistance value of the first temperature sensitive resistor (R6) is 1.32 times or more the resistance value of the second temperature sensitive resistor (R7).

3.  The load cell (1) according to claim 1 or 2, wherein
    the resistance value of the first temperature sensitive resistor (R6) is 5.76 times or less the resistance value of the second temperature sensitive resistor (R7).

4.  The load cell (1) according to claim 3, wherein
    the resistance value of the first temperature sensitive resistor (R6) is 3.52 times or less the resistance value of the second temperature sensitive resistor (R7).

5.  The load cell (1) according to any one of claims 1 to 4, wherein
    the second temperature sensitive resistor (R7) contains at least one of nickel, aluminum, gold, cobalt, tantalum, iron, and platinum.

**Patentansprüche**

1.  Kraftmesszelle (1), die aufweist:

    einen Dehnungskörper (10);
    eine Brückenschaltung (C) mit mehreren Dehnungsmessstreifen, die auf dem Dehnungskörper (10) vorgesehen sind;
    einen ersten temperaturempfindlichen Widerstand (R6), der mindestens Kupfer enthält und an einer Verdrahtung vorgesehen ist, die konfiguriert ist, eine Spannung an die Brückenschaltung anzulegen; und
    einen zweiten temperaturempfindlichen Widerstand (R7), der auf der Verdrahtung vorgesehen ist und ein Material oder ein Materialanteilsverhältnis aufweist, das sich von dem des ersten temperaturempfindlichen Widerstands (R6) unterscheidet,
    **dadurch gekennzeichnet, dass**
    ein Widerstandswert des ersten temperaturempfindlichen Widerstandes (R6) das 1,12-fache oder mehr des Widerstandswertes des zweiten temperaturempfindlichen Widerstandes (R7) beträgt.

2.  Kraftmesszelle (1) nach Anspruch 1, wobei
    der Widerstandswert des ersten temperaturempfindlichen Widerstands (R6) das 1,32-fache oder mehr des Widerstandswertes des zweiten temperaturempfindlichen Widerstands (R7) beträgt.

3.  Kraftmesszelle (1) nach Anspruch 1 oder 2, wobei
    der Widerstandswert des ersten temperaturempfindlichen Widerstands (R6) das 5,76-fache oder weniger des Widerstandswertes des zweiten temperaturempfindlichen Widerstands (R7) beträgt.

4.  Kraftmesszelle (1) nach Anspruch 3, wobei
    der Widerstandswert des ersten temperaturempfindlichen Widerstands (R6) das 3,52-fache oder weniger des Widerstandswertes des zweiten temperaturempfindlichen Widerstands (R7) beträgt.

**5.** Kraftmesszelle (1) nach einem der Ansprüche 1 bis 4, wobei
der zweite temperaturempfindliche Widerstand (R7) mindestens eines der Elemente Nickel, Aluminium, Gold, Kobalt, Tantal, Eisen und Platin enthält.

**Revendications**

**1.** Cellule de charge (1), comprenant :

un corps de déformation (10) ;
un circuit en pont (C) comprenant une pluralité de jauges de contrainte disposées sur le corps de déformation (10) ;
une première résistance thermosensible (R6) contenant au moins du cuivre et disposée sur un câblage prévu pour appliquer une tension au circuit en pont ; et
une deuxième résistance thermosensible (R7) disposée sur le câblage et présentant un matériau ou un rapport de teneur en matériau différent de celui de la première résistance thermosensible (R6),
**caractérisée en ce que**
la valeur de résistance de la première résistance thermosensible (R6) est au moins 1,12 fois supérieure à la valeur de résistance de la deuxième résistance thermosensible (R7).

**2.** Cellule de charge (1) selon la revendication 1, où
la valeur de résistance de la première résistance thermosensible (R6) est d'au moins 1,32 fois la valeur de résistance de la deuxième résistance thermosensible (R7).

**3.** Cellule de charge (1) selon la revendication 1 ou la revendication 2, où
la valeur de résistance de la première résistance thermosensible (R6) est d'au plus 5,76 fois la valeur de résistance de la deuxième résistance thermosensible (R7).

**4.** Cellule de charge (1) selon la revendication 3, où
la valeur de résistance de la première résistance thermosensible (R6) est d'au plus 3,52 fois la valeur de résistance de la deuxième résistance thermosensible (R7).

**5.** Cellule de charge (1) selon l'une des revendications 1 à 4, où
la deuxième résistance thermosensible (R7) contient au moins l'un des éléments suivants : nickel, aluminium, or, cobalt, tantale, fer et platine.

*Fig.1*

1

C

$e_{out}$

T2

T3

T4

T1

R1(R$_B$)

R2(R$_B$)

R3(R$_B$)

R4(R$_B$)

R5

R6(R$_M$)

R7(R$_M$)

L1

L2

V

10

Fig.2

*Fig.3*

| Cu | 41.6 | 42.6 | 43.6 | 44.6 | 45.6 | 46.6 | 47.6 | 48.6 | 49.6 | 51.6 | 53.6 | 54.6 |
|---|---|---|---|---|---|---|---|---|---|---|---|---|
| Ni | 18.4 | 17.7 | 17.0 | 16.3 | 15.6 | 14.9 | 14.2 | 13.5 | 12.8 | 11.2 | 9.3 | 8.3 |
| Cu/Ni | 2.26 | 2.41 | 2.56 | 2.74 | 2.92 | 3.13 | 3.35 | 3.60 | 3.88 | 4.61 | 5.76 | 6.58 |
| LL | 2.37 | 1.50 | 0.74 | 0.08 | -0.48 | -0.95 | -1.31 | -1.58 | -0.87 | 2.24 | 10.49 | 15.61 |
| HH | -0.29 | -0.31 | -0.21 | 0.00 | 0.33 | 0.78 | 1.35 | 2.03 | 4.01 | 9.39 | 20.43 | 27.06 |
| \|LL-HH\| | 2.66 | 1.81 | 0.95 | 0.08 | 0.81 | 1.73 | 2.66 | 3.61 | 4.88 | 7.15 | 9.94 | 11.45 |

| Cu | 30.6 | 31.6 | 32.6 | 33.6 | 34.6 | 35.6 | 36.6 | 37.6 | 38.6 | 39.6 | 40.6 |
|---|---|---|---|---|---|---|---|---|---|---|---|
| Ni | 26.1 | 25.4 | 24.7 | 24.0 | 23.3 | 22.6 | 21.9 | 21.2 | 20.5 | 19.8 | 19.1 |
| Cu/Ni | 1.17 | 1.24 | 1.32 | 1.40 | 1.48 | 1.58 | 1.67 | 1.77 | 1.88 | 2.00 | 2.13 |
| LL | 18.51 | 16.53 | 14.66 | 12.88 | 11.21 | 9.65 | 8.18 | 6.82 | 5.55 | 4.39 | 3.33 |
| HH | 7.83 | 6.49 | 5.27 | 4.17 | 3.19 | 2.33 | 1.60 | 0.98 | 0.48 | 0.11 | -0.15 |
| \|LL-HH\| | 10.68 | 10.04 | 9.39 | 8.71 | 8.02 | 7.32 | 6.58 | 5.84 | 5.07 | 4.28 | 3.48 |

# Fig.4

**Fig.5**

| Cu | 52.7 | 49.7 | 48.7 | 47.7 | 46.7 | 45.7 | 44.7 | 43.7 | 42.7 | 41.7 | 40.7 |
|---|---|---|---|---|---|---|---|---|---|---|---|
| Ni | 12.5 | 14.1 | 14.8 | 15.4 | 16.2 | 16.9 | 17.6 | 18.3 | 19.0 | 19.7 | 20.4 |
| Cu/Ni | 4.22 | 3.52 | 3.29 | 3.10 | 2.88 | 2.70 | 2.54 | 2.39 | 2.25 | 2.12 | 2.00 |
| LL | -2.22 | -1.8 | -1.82 | -1.75 | -1.58 | -1.31 | -0.95 | -0.48 | 0.08 | 0.74 | 1.50 |
| HH | 8.06 | 4.77 | 3.74 | 2.83 | 2.03 | 1.35 | 0.78 | 0.33 | 0.00 | -0.21 | -0.31 |
| \|LL-HH\| | 10.28 | 6.57 | 5.56 | 4.58 | 3.61 | 2.66 | 1.73 | 0.81 | 0.08 | 0.95 | 1.81 |

| Cu | 39.7 | 38.7 | 37.7 | 36.7 | 35.7 | 34.7 | 33.7 | 32.7 | 31.7 | 30.7 | 29.7 |
|---|---|---|---|---|---|---|---|---|---|---|---|
| Ni | 21.1 | 21.8 | 22.5 | 23.2 | 23.9 | 24.6 | 25.3 | 26.0 | 26.7 | 27.4 | 28.1 |
| Cu/Ni | 1.88 | 1.78 | 1.68 | 1.58 | 1.49 | 1.41 | 1.33 | 1.26 | 1.19 | 1.12 | 1.06 |
| LL | 2.37 | 3.33 | 4.39 | 5.55 | 6.82 | 8.18 | 9.65 | 11.21 | 12.88 | 14.66 | 16.53 |
| HH | -0.29 | -0.15 | 0.11 | 0.48 | 0.98 | 1.60 | 2.33 | 3.10 | 4.17 | 5.27 | 6.49 |
| \|LL-HH\| | 2.66 | 3.48 | 4.28 | 5.07 | 5.84 | 6.58 | 7.32 | 8.11 | 8.71 | 9.39 | 10.04 |

## Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61165606 A

- WO 2008029648 A1